# EUROPEAN PATENT SPECIFICATION

(11) **EP 3 890 861 B1**
(45) Date of publication and mention of the grant of the patent: **06.07.2022**
(21) Application number: 19809473.2
(22) Date of filing: 27.11.2019
(51) Int. Cl.: B01D 17/02, B01D 21/00, F16C 33/66, F16C 33/10, F16C 35/04, F16N 31/00

(54) **A BEARING HOUSING AND A METHOD OF REMOVING IMPURITIES FROM A BEARING HOUSING**
LAGERGEHÄUSE UND VERFAHREN ZUM ENTFERNEN VON VERUNREINIGUNGEN AUS EINEM LAGERGEHÄUSE
LOGEMENT DE PALIER ET PROCÉDÉ D'ÉLIMINATION DES IMPURETÉS D'UN LOGEMENT DE PALIER

(30) Priority: 04.12.2018 EP 18210244
(43) Date of publication of application: 13.10.2021
(73) Proprietor: Sulzer Management AG, 8401 Winterthur (CH)
(72) Inventor: NYMAN, Seppo, 49410 Poitsila (FI); RIPATTILA, Janne, 45130 Kouvola (FI)
(74) Representative: IPS Irsch AG
(86) International application number: PCT/EP2019/082731
(87) International publication number: WO 2020/114856

(56) References cited:
- EP-A1- 0 283 080
- GB-A- 1 183 826
- US-A- 3 198 590
- US-A1- 2002 146 315
- US-A1- 2004 197 212

## Description

### Technical field

The present invention relates to a bearing housing and a method of removing impurities from the bearing housing in accordance with claims 1 and 11. More generally, the present invention relates to bearing housings used in connection with various machines, like for instance centrifugal pumps, radial pumps, agitators, mixers, etc.

### Background art

Normally, the oil used for lubricating the bearings is contaminated in a few different ways. Impurities found in the lubricating oil may be originating from the wear of the bearing balls, rollers, inner and outer races or cages. Impurities may also loosen from the interior surface of the bearing housing, and impurities may also get into the bearing housing from outside thereof, due to, for instance, a seal failure.

Usually the impurities sink to the bottom of the housing, but it is not uncommon that the circulation of oil and the turbulence prevailing in the bearing housing keep the impurities moving, at least the smallest or the lightest ones such that they get into contact with the bearing surfaces and speed up the wear thereof.

For the above reason, it is common practice that the machine, for instance a pump, is stopped from time to time for the oil change. Such stopping of the pump, or any other device, may require that a process line is run down, or a second pump or device is arranged to the side of the pump to be serviced. And also, in connection with normal oil changes it is possible that the impurities sank and settled on the bottom of the bearing housing remain in the bearing housing, i.e. the impurities have formed a sticky paste-like material that does not in itself loosen from the bottom of the bearing housing. Such paste-like material cannot normally be removed from the bearing housing as the removal may, at its worst, require mechanical working on the material until it is loosened from the surface of the housing. Examples of bearing houses with draining features are disclosed in US3198590 and EP0283080.

An object of the present invention is to provide a novel bearing housing the use of which overcomes at least one of the prior art problems.

### Disclosure of the Invention

At least some objects of the present invention may be met substantially as is disclosed in the independent claims and in the other claims describing more details of different embodiments of the invention.

According to an embodiment of the present invention a bearing housing comprises a hollow shell with opposite ends having coaxial openings for at least one bearing element at each end thereof, wherein the shell between the openings has, when assembled in position for use, a bottom with a bottom surface, the bottom having an oil outlet and the bottom surface having an oil outlet opening, wherein a cavity for impurities is arranged below the bottom surface of the shell, the cavity being arranged in flow communication with the oil outlet and the oil outlet opening and the bearing housing comprises a first valve arranged between the cavity for impurities and the outlet in the bottom of the shell. The cavity is further closed by a plug or a removable bottom.

According to an embodiment of the invention cavity is provided with a cleaning access into its internal space, for removing accumulated impurities.

According to an embodiment of the invention the bearing housing comprises a second valve, wherein the cavity is arranged between the first valve and the second valve.

Advantageously the second valve is arranged to a bottom of the cavity for impurities.

According to an embodiment bearing housing comprises a discharge pipe, and the second valve is provided in the discharge pipe at a distance from the first valve, and the cavity for impurities being left between the first and the second valve in the discharge pipe.

Thus, a bearing housing for various pumps, mixers and agitators, for instance, is provided the performance of which is considerably improved. In other words, the oil in the bearing housing may be kept in good working condition for longer periods of time by only removing impurities from the oil. The removal of the impurities may be performed without stopping the machine the bearing housing is coupled to, whereby the downtime of the machine is considerably reduced. Also by allowing the impurities to settle in a cavity that may be cleaned without stopping the machine prevents paste-like impurities from being formed on the bottom surface of the bearing housing.

According to an embodiment of the invention a method is defined as in claim 11.

According to an embodiment of the invention a first valve and a second valve are arranged such that the cavity is formed between the two valves, and in the step d) the method comprises closing the first valve and opening the second valve and discharging impurities from the cavity.

According to an embodiment of the invention after discharging impurities from the cavity, the cavity is filled with oil via the second valve, the second valve is closed and the first valve is opened.

According to an embodiment of the invention the method further arranging a removable impurity trap in connection with the first valve wherein the step of discharging impurities from the cavity comprises removing the impurity trap arranged in connection with the first valve.

Invention provides several advantageous effects. The bearing housing according to the invention allows the impurities to be removed without a need to replace all the oil prevailing in the bearing housing.

Further the novel bearing housing according to the invention the impurities are collected in a cavity where the oil flow is not as turbulent as in the rest of the oil space in the bearing housing improving the settling of the impurities in the cavity.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in particular in the appended claims.

### Brief Description of Drawings

In the following, the present invention will be described in more detail with reference to the accompanying exemplary, schematic drawings, in which
Figure 1 illustrates a side view of a bearing housing in accordance with an embodiment of the present invention,
Figure 2 illustrates an isometric view of a bearing housing of the figure 1,
Figure 3 illustrates an enlarged schematical partial cross section of the bottom part of the bearing housing according to an embodiment of the invention,
Figure 4 illustrates an enlarged schematical partial cross section of the bottom part of the bearing housing in accordance with a another embodiment of the present invention,

### Detailed Description of Drawings

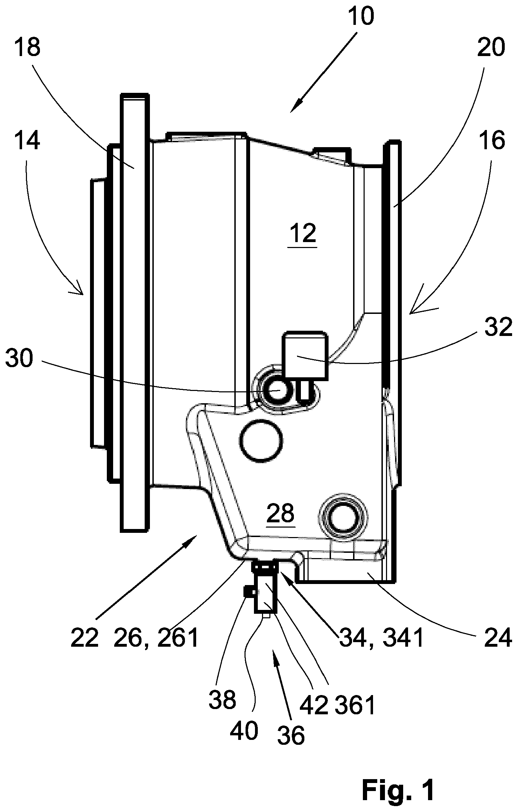

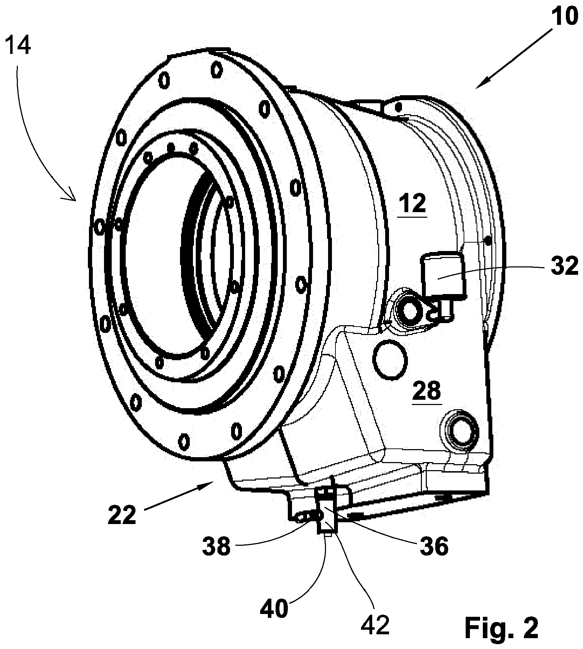

Figure 1 depicts a side view of a bearing housing 10 and Figure 2 depicts an isometric view of the bearing housing 10 in accordance with an embodiment of the present invention. The bearing housing 10 has normally a tubular shape, i.e. it has a hollow shell 12 with circular openings 14 and 16 at its both ends. The cross section of the shell 12 has normally a cylindrical, rectangular or square shape, though, naturally, the cross section of the shell may have any imaginable shape that fits with the use of the shell. The openings 14 and 16 are coaxial so that a shaft may run through the bearing housing 10. The openings 14 and 16 are configured for providing attachment of bearings for the shaft. Normally, there is one bearing or a set of bearings installed at each opening, and the openings may have a same or different diameter. One or both openings 14 and 16 may be surrounded with flange/s 18 and 20, respectively, so that the bearing housing 10 may be fastened to neighbouring components of the machine. The shell 12 may be, at its bottom part 22, when assembled in position for use, provided with a separate means 24 or an extension or leg for fastening the bearing housing 10 to a base plate, for example. For instance, if the bearing housing 10 is used for supporting a pump shaft, the bearing housing 10 may have at its one end a flange 18 to which the pump volute is fastened and the shell 12 may have at its bottom 26 a fixed or removable leg 24 extending down to a base plate on which the pump volute is also supported.

As the actual space between the openings 14 and 16 in the bearing housing 10 as well as the diameter, or, rather, an internal dimension at right angles to the axis, of the shell 12 may be relatively small the shell 12 may be, as shown in the figure 1, provided with an oil chamber 28 so that some more oil may be provided in the bearing housing 10. The surface area of the oil chamber 28 increases the cooling surface for the oil, whereby it may be ensured that the oil remains in its desired temperature range in all available operating conditions the bearing housing 10 may experience. The side wall of the shell 12 is provided, preferably but not necessarily, with a sight glass 30 by means of which it is easy to check or to inspect that the oil in the bearing housing 10 is at its desired level. The sight glass 30 may be replaced with any known means for determining liquid level in a vessel. The side wall of the shell 12, or the shell 12 in general, is, in this embodiment at a side of the sight glass 30, provided with a cup or funnel 32 for adding oil. In other words, when it is detected that the oil level in the bearing housing 10 has decreased oil may be added via the cup or funnel 32 to reach the desired oil level again.

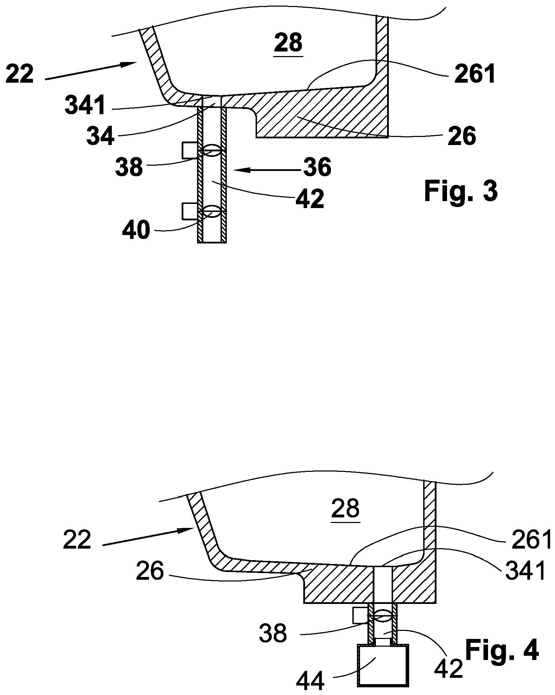

The bottom 26 of the bearing housing 10 or that of the shell 12, which is also the bottom 26 of the oil chamber 28 of the shell 12, is provided with an outlet 34 and an outlet opening 341. The bottom of the shell 12 is shown in the embodiments of figures 3 and 4 in more detailed manner describing another optional embodiments of the invention. Applying also the embodiment shown in the figures 1 and 2, the inner bottom surface 261 of the bottom 26 of the bearing housing 10 or that of the shell 12 tapers towards the outlet opening 341 such that the impurities may collect in the lowermost part of the bottom 26, i.e. into the outlet opening 341 and sink in the outlet 34. However, now in accordance with the present invention the outlet 34 is not provided with an ordinary plug but a downwardly extending discharge pipe 36 or alike provided with a first valve 38 and a cavity 42 for impurities behind the first vale 38, when seen from the inside of the housing 10.. The first valve is illustrated in a very schematical and exemplary manner in the drawings. The type of the first valve 38 may vary, and is by no means limited to the shown butterfly valve. Advantageously the first valve 38 is a manually operated valve. The discharge pipe 36 and the first valve 38 function such that the impurities not only move to the lowermost part of the bottom 26/261 but sink inside the discharge pipe 36 and settle below the first valve 38, i.e. into a pipe section 361 forming the cavity 42 below the first valve 38. The pipe section 361 forms a cavity below the bottom surface 261, and the outlet opening 341, of the shell 12 for the impurities to collect. Now that the first valve 38 is maintained open, the impurities from the housing 10 falls into the cavity and the pipe section 361 of the discharge pipe 36. The cavity is provided with a cleaning access thereto, i.e. its internal space inside the cavity for removing the impurities accumulated therein. In the embodiment shown in the figures 1 and 2 the pipe section 361 is plugged, or otherwise closed, at its end by a plug 40, or alternatively provided with a removable bottom. The plug may be functionally referred to as a second valve 40. The first valve 38 is normally maintained open allowing impurities to settle in the cavity, and when needed or desired, the first valve 38 is closed and the impurities are discharged from the cavity 42 by opening the plug 40 at the end of the discharge pipe 36. Now that the first valve 38 is closed all the time needed for proper cleaning the cavity 42 carefully may be taken. As the volume of the cavity is substantially small, only a limited amount of oil is taken out of the bearing housing 10, whereby the oil level descends only a little. The oil level may be returned to its exactly correct level by adding oil via the cup or funnel 32. Oil may also, naturally, be added to the cup/funnel 32 during the bleeding of the impurities such that the oil level does not, in practice, change at all.

Figure 3 depicts an enlarged schematical partial cross section of the bottom part 22 of the bearing housing in accordance with an embodiment of the present invention. In fact, the embodiment shown in the figure 2 is such a variation of the above discussed figures 1 and 2 that the discharge pipe 36 is provided with the first valve 38 and a second valve 40 at a distance from the first valve 40, when assembled in position for use, below the first valve 38 such that a cavity 42 for impurities is formed between the two valves 38 and 40. The second valve 40 is closed and the first valve 38 open in normal running conditions. The above arrangement functions such that the impurities first move along the inclined bottom surface 261 of the oil chamber 28 or the bottom area of the shell towards the outlet opening 34 and then sink into the discharge pipe 36 and settle to the cavity 42 between the first valve 38 and the second valve 40, i.e. well below the bottom surface 261 of the shell. After a certain period of time the first valve 38 is closed and the second valve 40 is opened to bleed the impurities from the discharge pipe 36. Now that the first valve 38 is closed the discharge pipe 36 and the second valve 40 below the first valve 38 may be, if desired, flushed, rinsed or mechanically cleaned, for instance by brushing as there is no risk of further lowering the oil level in the bearing housing. When the impurities are removed, and the discharge pipe 36, possibly, cleaned, the second valve 40 is closed and the first one 38 opened. While opening the first valve 38 oil is added via the cup/funnel (see referenced numeral 32 in Fig. 1) to maintain the desired oil level in the bearing housing.

The above discussed embodiment may be simplified with a variation where the first valve 38 is coupled directly to the bottom 26 of the oil chamber 28 or shell, and the discharge pipe 36 to the first valve 38. Otherwise both the construction and the function thereof is as discussed above.

Figure 4 depicts an enlarged schematical partial cross section of the bottom part 22 of the bearing housing in accordance with another embodiment of the present invention. In practice, the embodiment shown in the figure 4 is a further development of, and applicable to other embodiments such that a removable impurity trap 44 is attached in connection with, or behind (seen from the inside of the housing 10) the first valve 38, forming at least a lower part of the cavity 40, to the lower end of the discharge pipe 36 when the bearing housing is assembled in position for use. The arrangement functions such that the impurities first move along the inclined bottom surface 261 of the oil chamber 28 towards the outlet opening 341 and then sink in normal running conditions into the discharge pipe 36, or directly to the cavity 42 and settle in the impurity trap 44 below the valve 38. After a certain period of running time the valve 38 is closed and the impurity trap 44 is removed from the end of the discharge pipe 36, or the bottom of the housing 10, for emptying and cleaning. Now that the first valve 38 is closed all the time needed for cleaning the impurity trap 44 carefully may be taken. When the impurities are removed from the impurity trap 44 and the impurity trap 44 cleaned, the impurity trap 44 is fastened back to the lower end of the discharge pipe 36, and the first valve 38 may be opened. While the valve 38 is opened the impurities sank in the discharge pipe 36 will further descend into the impurity trap 44. Thus, when the arrangement comprises a removable trap 44, only one valve 38 is needed for the bearing housing.

As is shown in the figure 4 the arrangement may be simplified with a variation where the first valve 38 is coupled directly to the shell, the leg or the bottom of the oil chamber 28 or shell, and the impurity trap 44 to the first valve 38.

## Claims

1. A bearing housing comprising a hollow shell (12) with opposite ends having coaxial openings (14, 16) for at least one bearing element at each end thereof, wherein the shell (12) between the openings (14, 16) has, when assembled in position for use, a bottom (26) with a bottom surface (261), the bottom (26) having an oil outlet (34) and the bottom surface (261) having an oil outlet opening (341), wherein a cavity (42) for impurities is arranged below the bottom surface (261) of the shell (12), the cavity (42) being arranged in flow communication with the oil outlet (34) and the oil outlet opening (341), **characterized in that** the bearing housing comprises a first valve (38) arranged between the cavity (42) for impurities and the outlet (34) in the bottom (26) of the shell (12), and that the cavity is closed by a plug (40) or a removable bottom.

2. The bearing housing as recited in claim 1, **characterized in that** the cavity (42) is provided with a cleaning access into its internal space.

3. The bearing housing as recited in claim 1, **characterized in that** the bearing housing comprises a second valve (40), wherein the closed cavity (42) is between the first valve (38) and the second valve (40).

4. The bearing housing as recited in claim 3, **characterized in that** the second valve (40) is arranged to the bottom of the cavity (46) for impurities.

5. The bearing housing as recited in claim 1, **characterized in that** a discharge pipe (36) is provided in flow communication with the outlet (34).

6. The bearing housing as recited in claims 3 and 5, **characterized in that** the discharge pipe (36) forming, at least partially, the cavity ( 42) for the impurities.

7. The bearing housing as recited in claim 1, **characterized in that** a second valve (40) is provided in the discharge pipe (36) at a distance from the first valve (38), and the closed cavity (42) for impurities being between the first and the second valve (38; 40) in the discharge pipe (36).

8. The bearing housing as recited in claim 1, **characterized in that** an impurity trap (44) is arranged at an end of the discharge pipe (30).

9. The bearing housing as recited in claim 8, **characterized in** the impurity trap (44) being a removable cup.

10. The bearing housing as recited in any one of the preceding claims, **characterized in** the bottom surface (261) being inclined towards the outlet opening (341).

11. A method of removing impurities from a bearing housing (10) comprising a shell (12) having, when assembled in position for use, a bottom (26) with a bottom surface (261) and an outlet (34) for oil in the bottom, the method being **characterized by** the steps of:
a) providing the bearing housing (10) with a closed cavity (42), the cavity being closed by a plug (40) or a removable bottom, below the bottom surface (261) in flow connection with the bearing housing (10) via the outlet (34), and with a first valve (38) in flow communication with the oil outlet (34), between the closed cavity (42) and the outlet (34) in the bottom of the shell (12),
b) maintaining the first valve (38) open,
c) allowing impurities to settle in the closed cavity (361, 42, 44), and
d) closing the first valve (38) and discharging impurities from the cavity (42).

12. The method as recited in claim 11, **characterized by** providing a first valve (38) and a second valve (40) such that the cavity (42) is formed between the two valves (38, 40), and in the step d), closing the first valve (38) and opening the second valve (40) and discharging impurities from the cavity (42).

13. The method as recited in claim 11, **characterized by** after discharging impurities from the cavity, filling the cavity with oil via the second valve (40), closing the second valve (40) and opening the first valve (38).

14. The method as recited in claim 11, **characterized by** arranging a removable impurity trap (44) in connection with the first valve (38) wherein the step of discharging impurities from the cavity (42) comprises removing the impurity trap (44) arranged in connection with the first valve (38).

## Patentansprüche

1. Lagergehäuse, das eine hohle Ummantelung (12) umfasst, deren gegenüberliegende Enden koaxiale Öffnungen (14, 16) für mindestens ein Lagerelement an jedem Ende aufweisen, wobei die Ummantelung (12) in montiertem Zustand in Gebrauchsposition zwischen den Öffnungen (14, 16) einen Boden (26) mit einer Bodenfläche (261) aufweist, wobei der Boden (26) einen Ölauslass (34) aufweist und die Bodenfläche (261) eine Ölauslassöffnung (341) aufweist, wobei ein Hohlraum (42) für Verunreinigungen unterhalb der Bodenfläche (261) der Ummantelung (12) angeordnet ist, wobei der Hohlraum (42) in Strömungsaustausch mit dem Ölauslass (34) und der Ölauslassöffnung (341) angeordnet ist, **dadurch gekennzeichnet, dass** das Lagergehäuse ein erstes Ventil (38) umfasst, das zwischen dem Hohlraum (42) für Verunreinigungen und dem Auslass (34) im Boden (26) der Ummantelung (12) angeordnet ist, und dass der Hohlraum durch einen Stopfen (40) oder einen abnehmbaren Boden verschlossen ist.

2. Lagergehäuse nach Anspruch 1, **dadurch gekennzeichnet, dass** der Hohlraum (42) mit einem Reinigungszugang zu seinem Innenraum versehen ist.

3. Lagergehäuse nach Anspruch 1, **dadurch gekennzeichnet, dass** das Lagergehäuse ein zweites Ventil (40) umfasst, wobei sich der geschlossene Hohlraum (42) zwischen dem ersten Ventil (38) und dem zweiten Ventil (40) befindet.

4. Lagergehäuse nach Anspruch 3, **dadurch gekennzeichnet, dass** das zweite Ventil (40) am Boden des Hohlraumes (46) für Verunreinigungen angeordnet ist.

5. Lagergehäuse nach Anspruch 1, **dadurch gekennzeichnet, dass** ein Abflussrohr (36) in Strömungsaustausch mit dem Auslass (34) vorgesehen ist.

6. Lagergehäuse nach Anspruch 3 und 5, **dadurch gekennzeichnet, dass** das Abflussrohr (36) zumindest teilweise den Hohlraum (42) für die Verunreinigungen bildet.

7. Lagergehäuse nach Anspruch 1, **dadurch gekennzeichnet, dass** ein zweites Ventil (40) in dem Abflussrohr (36) in einem Abstand von dem ersten Ventil (38) vorgesehen ist, und sich der geschlossene Hohlraum (42) für Verunreinigungen zwischen dem ersten und dem zweiten Ventil (38; 40) in dem Abflussrohr (36) befindet.

8. Lagergehäuse nach Anspruch 1, **dadurch gekennzeichnet, dass** eine Verunreinigungs-Auffangvorrichtung (44) an einem Ende des Abflussrohrs (30) angeordnet ist.

9. Lagergehäuse nach Anspruch 8, **dadurch gekennzeichnet, dass** die Verunreinigungs-Auffangvorrichtung (44) eine abnehmbare Schale ist.

10. Lagergehäuse nach einem der vorangehenden Ansprüche, **dadurch gekennzeichnet, dass** die Bodenfläche (261) zur Auslassöffnung (341) hin geneigt ist.

11. Verfahren zum Entfernen von Verunreinigungen aus einem Lagergehäuse (10), das eine Ummantelung (12) umfasst, die in montiertem Zustand in Gebrauchsposition einen Boden (26) mit einer Bodenfläche (261) und im Boden einen Auslass (34) für Öl aufweist, wobei das Verfahren durch die Schritte gekennzeichnet ist:
a) Versehen des Lagergehäuses (10) mit einem geschlossenen Hohlraum (42), wobei der Hohlraum durch einen Stopfen (40) oder einen abnehmbaren Boden verschlossen ist, unterhalb der Bodenfläche (261) in Strömungsverbindung mit dem Lagergehäuse (10) über den Auslass (34), und mit einem ersten Ventil (38) in Strömungsaustausch mit dem Ölauslass (34) zwischen dem geschlossenen Hohlraum (42) und dem Auslass (34) im Boden der Ummantelung (12),
b) Offenhalten des ersten Ventils (38),
c) Ermöglichen der Ablagerung von Verunreinigungen in dem geschlossenen Hohlraum (361, 42, 44), und
d) Schliessen des ersten Ventils (38) und Ablassen von Verunreinigungen aus dem Hohlraum (42).

12. Verfahren nach Anspruch 11, **gekennzeichnet durch** Bereitstellen eines ersten Ventils (38) und eines zweiten Ventils (40), so dass der Hohlraum (42) zwischen den beiden Ventilen (38, 40) gebildet wird, und durch Schritt d) Schliessen des ersten Ventils (38) und Öffnen des zweiten Ventils (40) und Ablassen von Verunreinigungen aus dem Hohlraum (42).

13. Verfahren nach Anspruch 11, **dadurch gekennzeichnet, dass** nach dem Ablassen von Verunreinigungen aus dem Hohlraum, der Hohlraum mit Öl über das zweite Ventil (40) gefüllt wird, das zweite Ventil (40) geschlossen wird und das erste Ventil (38) geöffnet wird.

14. Verfahren nach Anspruch 11, **dadurch gekennzeichnet, dass** eine abnehmbare Verunreinigungs-Auffangvorrichtung (44) in Verbindung mit dem ersten Ventil (38) angeordnet wird, wobei der Schritt des Ablassens von Verunreinigungen aus dem Hohlraum (42) das Abnehmen der in Verbindung mit dem ersten Ventil (38) angeordneten Verunreinigungs-Auffangvorrichtung (44) umfasst.

## Revendications

1. Un logement de palier comprenant une enveloppe creuse (12) avec des extrémités opposées présentant des ouvertures coaxiales (14, 16) pour au moins un élément de palier à chacune de ses extrémités, dans lequel l'enveloppe (12) présente entre les ouvertures (14, 16), lorsqu'elle est assemblée en position d'utilisation, un fond (26) avec une surface de fond (261), le fond (26) ayant une sortie d'huile (34) et la surface de fond (261) ayant une ouverture de sortie d'huile (341), dans lequel une cavité (42) pour les impuretés est disposée en dessous de la surface de fond (261) de l'enveloppe (12), la cavité (42) étant disposée en communication d'écoulement avec la sortie d'huile (34) et l'ouverture de sortie d'huile (341), **caractérisé en ce que** le logement de palier comprend une première soupape (38) disposée entre la cavité (42) pour les impuretés et la sortie (34) dans le fond (26) de l'enveloppe (12), et que la cavité est fermée par un bouchon (40) ou un fond amovible.

2. Le logement de palier selon la revendication 1, **caractérisé en ce que** la cavité (42) est pourvue d'un accès de nettoyage à son intérieur.

3. Le logement de palier selon la revendication 1, **caractérisé en ce que** le logement de palier comprend une deuxième soupape (40), dans lequel la cavité fermée (42) est entre la première soupape (38) et la deuxième soupape (40).

4. Le logement de palier selon la revendication 3, **caractérisé en ce que** la deuxième soupape (40) est disposée au fond de la cavité (46) pour les impuretés.

5. Le logement de palier selon la revendication 1, **caractérisé en ce qu'**un tuyau de décharge (36) est prévu en communication d'écoulement avec la sortie (34).

6. Le logement de palier selon la revendication 3 et 5, **caractérisé en ce que** le tuyau de décharge (36) forme, au moins partiellement, la cavité (42) pour les impuretés.

7. Le logement de palier selon la revendication 1, **caractérisé en ce qu'**une deuxième soupape (40) est prévue dans le tuyau de décharge (36) à une distance de la première soupape (38), et la cavité fermée (42) pour les impuretés étant entre la première et la deuxième soupape (38 ; 40) dans le tuyau de décharge (36).

8. Le logement de palier selon la revendication 1, **caractérisé en ce qu'**un piège à impuretés (44) est disposé à une extrémité du tuyau de décharge (30).

9. Le logement de palier selon la revendication 8, **caractérisé en ce que** le piège à impuretés (44) est une coupelle amovible.

10. Le logement de palier selon l'une des revendications précédentes, **caractérisé en ce que** la surface de fond (261) est inclinée vers l'ouverture de sortie (341).

11. Un procédé d'élimination des impuretés d'un logement de palier (10) comprenant une enveloppe (12) ayant, lorsqu'elle est assemblée en position d'utilisation, un fond (26) avec une surface de fond (261) et une sortie (34) pour l'huile dans le fond, le procédé étant **caractérisé par** les étapes de :
a) munir le logement de palier (10) d'une cavité fermée (42), la cavité étant fermée par un bouchon (40) ou un fond amovible, en dessous de la surface de fond (261) en liaison d'écoulement avec le logement de palier (10) via la sortie (34), et d'une première soupape (38) en communication d'écoulement avec la sortie d'huile (34) entre la cavité fermée (42) et la sortie (34) dans le fond de l'enveloppe (12),
b) maintenir la première soupape (38) ouverte,
c) permettre aux impuretés de se déposer dans la cavité fermée (361, 42, 44), et
d) fermer la première soupape (38) et décharger les impuretés de la cavité (42).

12. Le procédé selon la revendication 11, **caractérisé par** fournir une première soupape (38) et d'une deuxième soupape (40) de sorte que la cavité (42) est formée entre les deux soupapes (38, 40), et par l'étape d) fermer la première soupape (38) et ouvrir la deuxième soupape (40) et décharger les impuretés de la cavité (42).

13. Le procédé selon la revendication 11, **caractérisé par**, après avoir déchargé les impuretés de la cavité, remplir la cavité avec de l'huile via la deuxième soupape (40), fermer la deuxième soupape (40) et ouvrir la première soupape (38).

14. Le procédé selon la revendication 11, **caractérisé par** disposer un piège à impuretés amovible (44) en liaison avec la première soupape (38), dans lequel l'étape de décharger les impuretés de la cavité (42) comprend le retrait du piège à impuretés (44) disposé en liaison avec la première soupape (38).
